# EUROPÄISCHE PATENTSCHRIFT

(11) **EP 2 653 412 B1**
(45) Veröffentlichungstag und Bekanntmachung des Hinweises auf die Patenterteilung: **12.11.2014**
(21) Anmeldenummer: 13162125.2
(22) Anmeldetag: 03.04.2013
(51) Int. Cl.: B65G 45/04, F16C 13/00

(54) **Kurvenrolle**
Cam roller
Galet à came

(30) Priorität: 04.04.2012 DE 102012102964
(43) Veröffentlichungstag der Anmeldung: 23.10.2013
(73) Patentinhaber: Krones AG, 93073 Neutraubling (DE)
(72) Erfinder: Albrecht, Thomas, 93073 Neutraubling (DE)
(74) Vertreter: Nordmeyer, Philipp Werner

(56) Entgegenhaltungen:
- WO-A1-2011/152601
- DE-A1-102004 012 961
- US-B2- 7 766 552

## Beschreibung

### Technisches Gebiet

Die vorliegende Erfindung betrifft eine Kurvenrolle für ein Kurvengetriebe, eine Kurvensteuerung und/oder eine Rollenbahn.

### Stand der Technik

Zur Zwangssteuerung von Maschinenteilen in Kurvengetrieben, Kurvensteuerungen und/oder Rollenbahnen ist es bekannt, eine Kurvenrolle in einer Nutkurve des Kurvengetriebes oder der Kurvensteuerung und/oder auf einer Rollenbahn zu führen.

Beispielsweise aus der DE 20 2006 003 975 U1 ist ein Schraubverschließer für Flaschen bekannt, bei welchem Hubstangen, mittels welcher die Flaschen gegen einen Verschließkopf bewegt werden, über eine Zwangssteuerung gesteuert werden, welche eine in sich geschlossene Nutkurve mit darin geführten Kurvenrollen aufweist.

Es sind Kurvenrollen bekannt, welche mit wartungsfreien Wälzlagern ausgestattet sind. Diese wartungsfreien Wälzlager können beispielsweise mit einem Festschmierstoff-Compound gefüllt sein.

Nicht nur das Lager zwischen dem eigentlichen Rollenkörper und dem Rollenbolzen muss geschmiert werden, sondern auch der Kontaktbereich zwischen der jeweiligen Nutkurve beziehungsweise der Rollenbahn und dem Rollenkörper muss geschmiert werden, um einen verschleißarmen Betrieb zu ermöglichen.

Aus der DE 10 2007 008 330 A1 ist ein Wälzkurvengetriebe bekannt, bei welchem Kurvenrollen auf Kurvenbahnen geführt werden und die Kurvenbahnen jeweils mit Schmierbahnen versehen sind. Beim Überfahren der Schmierbahnen nehmen die Kurvenrollen an ihren Laufflächen entsprechend Schmierstoff auf.

Eine solche Schmierung der Laufflächen der Rollenkörper einer Kurvenrolle kann jedoch zu einer Verschmutzung von Kurvenbahn und Kurvenrolle führen und verringert damit die Einsatzmöglichkeiten bei der Anwendung einer solchen Kurvenrolle in Aseptikanlagen bei der Abfüllung von Getränken, im Vakuum oder in Anlagen, welche besondere Anforderungen an Hygiene und Reinheit aufweisen.

### Darstelluna der Erfindung

Entsprechend ist es eine Aufgabe der vorliegenden Erfindung, eine Kurvenrolle anzugeben, welche die Abgabe von Schmierstoffen an die Kurvenbahn reduziert.

Diese Aufgabe wird durch eine Kurvenrolle mit den Merkmalen des Anspruchs 1 gelöst. Vorteilhafte Weiterbildungen ergeben sich aus den Unteransprüchen.

Entsprechend umfasst die Kurvenrolle für ein Kurvengetriebe, eine Kurvensteuerung und/oder eine Rollenbahn einen Rollenbolzen und einen um diesen rotierbaren Rollenkörper, welcher auf einer Nutkurve des Kurvengetriebes, der Kurvensteuerung und/oder auf einer Rollenbahn führbar ist. Erfindungsgemäß ist ein an dem Rollenbolzen gehaltener Schmierstoffträger zur Abgabe von Schmierstoff auf die Lauffläche des Rollenkörpers vorgesehen.

Dadurch, dass die Kurvenrolle einen an dem Rollenbolzen gehaltenen Schmierstoffträger zum Abgeben von Schmierstoff auf die Lauffläche des Rollenkörpers umfasst, können sehr kleine Mengen an Schmierstoff direkt auf die Lauffläche des Rollenkörpers aufgegeben werden. Da der Schmierstoffträger entsprechend mit der Bewegung des Rollenkörpers entlang der Nutkurve mitgeführt wird, weil er an dem Rollenbolzen angeordnet ist, sind separate Schmierstoffbahnen an der Kurvenbahn, welche Schmierstoff an die Umgebung abgeben, nicht notwendig. Vielmehr befindet sich der Schmierstoffträger stets an dem Ort, an welchem er benötigt wird, um effizient Schmierstoff auf die Lauffläche des Rollenkörpers aufzugeben. Damit kann eine gezielte Abgabe von Schmierstoff nur in die Bereiche ermöglicht werden, welche den Schmierstoff tatsächlich benötigen.

Aufgrund der reduzierten Abgabe von Schmierstoffen an die Umgebung kann eine solche Kurvenrolle in einer Aseptikanlage zum Abfüllen von Getränken verwendet werden. Eine solche Kurvenrolle eignet sich weiterhin auch zur Anwendung im Vakuum und in Anlagen, welche erhöhte Anforderungen an Hygiene und Sauberkeit stellen.

Dadurch, dass der Schmierstoffträger mit dem Rollenkörper mitgeführt wird, kann eine deutlich geringere Menge an Schmierstoff auf die Lauffläche des Rollenkörpers aufgebracht werden, da stets lediglich maximal eine halbe Umdrehung der Lauffläche durchgeführt werden muss, bis die Lauffläche wieder mit dem Schmierstoffträger in Kontakt kommt. Entsprechend kann die auf die Lauffläche zu dosierende Menge an Schmierstoff sehr gering eingestellt werden und es muss nur eine Schmierstoffmenge abgegeben werden, welche für eine halbe Umdrehung oder einen einzelnen Kontakt mit der Nutkurve ausreichend ist.

Bei Kurvenrollen gemäß dem Stand der Technik, welche beispielsweise über in den jeweiligen Nutkurven eingebrachte Schmierstoffbahnen mit Schmierstoff versorgt werden, muss jeweils eine wesentlich größere Menge an Schmierstoff auf der Lauffläche aufgenommen werden, um die Strecke bis zur nächsten Schmierstoffbahn zu überbrücken. Im Stand der Technik sind die Schmierstoffbahnen lediglich an den jeweiligen Endpunkten der Nutkurve vorgesehen, so dass an diesen Schmierstoffbahnen so viel Schmierstoff aufgenommen werden muss, dass dieser über die gesamte Strecke der jeweiligen Nutkurve hinweg bis zur nächsten Schmierstoffbahn ausreicht.

Durch die vorliegende Erfindung kann die Menge an pro Umdrehung des Rollenkörpers auf die Lauffläche des Rollenkörpers aufzubringendem Schmierstoff entsprechend signifikant reduziert werden.

Dadurch, dass der Schmierstoffträger an dem Rollenbolzen gehalten ist, kann der Schmierstoffträger mit dem Rollenkörper mitgeführt werden und kann konzentrisch zum Rollenkörper angeordnet werden. In einer besonders bevorzugten Variante ist der Schmierstoffträger verdrehsicher an dem Rollenbolzen befestigt, so dass ein Touchieren, Schleifen oder Schaben des Schmierstoffträgers an der Nutkurve beziehungsweise der Rollenbahn ausgeschlossen wird und der Schmierstoffträger tatsächlich nur die Lauffläche des Rollenkörpers kontaktiert. Auf diese Weise kann die Verschmutzung der Umgebung durch den Schmierstoff noch weiter reduziert werden.

Bevorzugt umfasst der Schmierstoffträger einen Festschmierstoff-Compound, bevorzugt in Form einer festen, porösen Matrixstruktur, in welcher eine Schmierstoffmenge gespeichert ist. In einer besonders bevorzugten Ausgestaltung sind dabei sämtliche Seiten des Schmierstoffträgers versiegelt, welche einen Kontakt zur Umgebung haben. Entsprechend ist nur die Seite nicht versiegelt, welche in direktem Kontakt mit der Lauffläche des Rollenkörpers steht. Auf diese Weise kann besonders effektiv ein Austritt von Schmierstoff in die Umgebung verhindert werden.

In einer bevorzugten Ausgestaltung ist an dem Rollenbolzen ein äußerer Käfig gehalten, in welchem der Schmierstoffträger aufgenommen ist. Durch einen solchen äußeren Käfig kann der Schmierstoffträger zuverlässig an der Lauffläche des Rollenkörpers angelegt werden. Dabei kann das Material des äußeren Käfigs so gewählt werden, dass es eine entsprechende Festigkeit aufweist. Dies ist unabhängig von der Festigkeit des Schmierstoffträgers, welcher typischerweise eher ein poröses Material umfasst.

Besonders bevorzugt ist zwischen dem äußeren Käfig und dem Schmierstoffträger ein Vorspannmittel vorgesehen, um den Schmierstoffträger auf die Lauffläche des Rollenkörpers hin vorzuspannen. Durch das Vorspannmittel kann ein Anpressdruck des Schmierstoffträgers an die Lauffläche des Rollenkörpers erreicht werden, der auch bei einer Abnutzung der Schmierstoffträgers aufrechterhalten werden kann. Das Vorspannmittel kann in einer besonders vorteilhaften Ausgestaltung durch ein Elastomer oder eine Blattfeder ausgebildet sein.

Um eine Unabhängigkeit bezüglich der Bewegungsrichtung der Kurvenrolle zu erreichen, ist der Schmierstoffträger bevorzugt symmetrisch zum Rollenbolzen angeordnet. Weiterhin kann in diesem Zusammenhang der Schmierstoffträger mindestens zwei Teile aufweisen, welche an dem Rollenbolzen gehalten sind, bevorzugt mittels zwei äußeren Käfigen.

Der Schmierstoffträger und besonders bevorzugt der Käfig und/oder das Vorspannmittel sind bevorzugt in einem Winkelbereich des Rollenkörpers vorgesehen, welcher einen Kontaktbereich der Lauffläche des Rollenkörpers mit einer Kurvennut eines Kurvengetriebes oder einer Kurvensteuerung und/oder einen Kontaktbereich mit einer Rollenbahn frei lässt. Mit anderen Worten soll die Anordnung aus Schmierstoffträger, äußerem Käfig und Vorspannmittel so gestaltet sein, dass eine Bewegung der Kurvenrolle entlang der entsprechend vorgegebenen Bahn möglich ist, ohne dass die genannten Bestandteile an der Bahn schleifen.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische perspektivische Ansicht einer Kurvenrolle in einer Ansicht schräg von vorne; und
- Figur 2: eine schematische perspektivische Ansicht der Kurvenrolle aus Figur 1 in einer Ansicht von schräg hinten.

### Detaillierte Beschreibung bevorzuater Ausführungsbeispiele

Im Folgenden werden bevorzugte Ausführungsbeispiele anhand der Figuren beschrieben. Dabei werden gleiche, ähnliche oder gleichwirkende Elemente mit identischen Bezugszeichen bezeichnet und auf eine wiederholte Beschreibung dieser Elemente wird in der nachfolgenden Beschreibung teilweise verzichtet, um Redundanzen zu vermeiden.

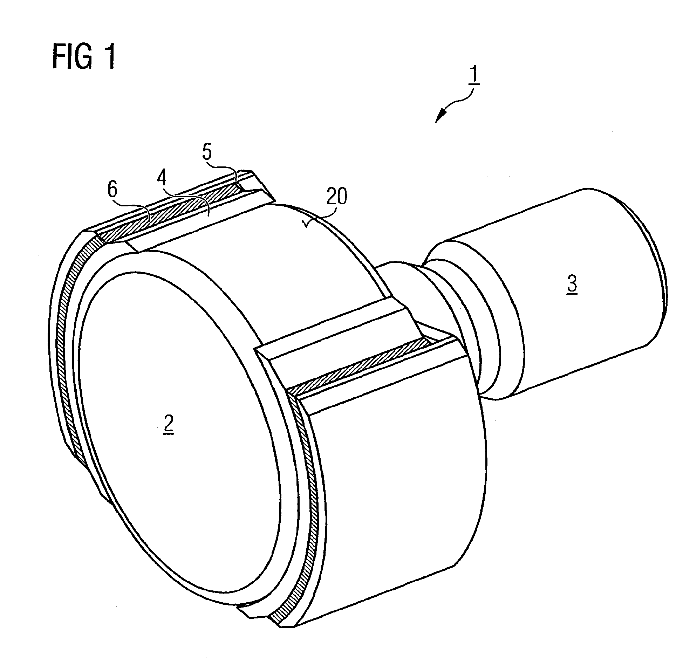

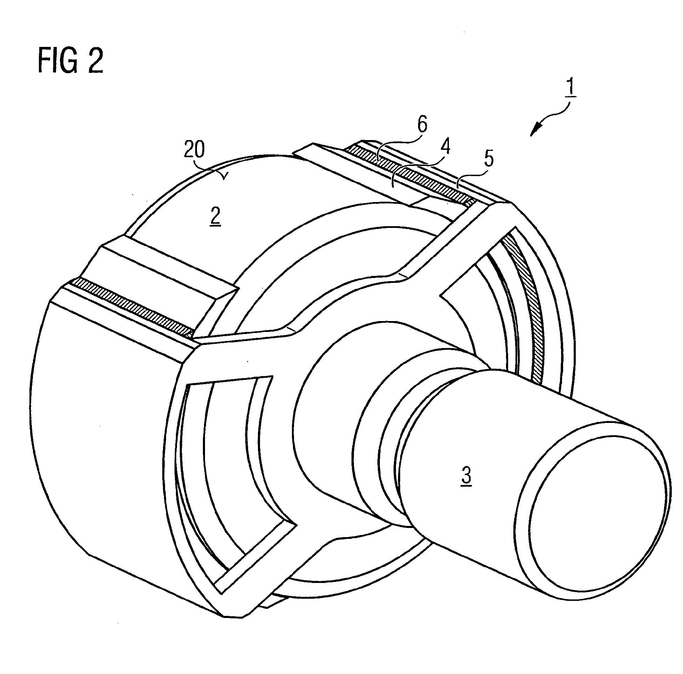

Figuren 1 und 2 zeigen eine Kurvenrolle 1, welche beispielsweise für ein Kurvengetriebe, eine Kurvensteuerung oder eine Rollenbahn zur Zwangssteuerung mechanischer Vorgänge in Anlagen geeignet ist. Die Kurvenrolle 1 kann insbesondere im Bereich der Befüll- und Verpackungstechnik von Getränken angewendet werden, beispielsweise in einem Schraubverschließer für Getränkeflaschen.

Die Kurvenrolle 1 umfasst einen Rollenkörper 2, welcher auf einem Rollenbolzen 3 rotierbar gelagert ist. Der Rollenkörper 2 weist eine Lauffläche 20 auf, welche in Kontakt mit der jeweiligen Nutbahn des Kurvengetriebes oder der Kurvensteuerung, oder mit einer Rollenbahn steht. Der Rollenbolzen 3 ist dabei üblicherweise verdrehfest in dem jeweiligen Maschinenteil, welches über die Kurvenrolle 1 zwangsgesteuert wird, angeordnet.

Ein Schmierstoffträger 4 zum Aufbringen von Schmierstoff auf die Lauffläche 20 des Rollenkörpers 2 ist vorgesehen, wobei der Schmierstoffträger 4 an dem Rollenbolzen 3 gehalten ist. Entsprechend wird der Schmierstoffträger 4 mit der Bewegung der Kurvenrolle 1 mitgeführt.

In dem bevorzugten Ausführungsbeispiel, welches in den Figuren 1 und 2 gezeigt ist, wird der Schmierstoffträger 4 über einen äußeren Käfig 5 an dem Rollenbolzen 3 gehalten. Der äußere Käfig 5 ist dabei bevorzugt verdrehsicher an dem Rollenbolzen 3 gehalten, so dass weder der äußere Käfig 5 noch der Schmierstoffträger 4 beim Durchlaufen der Nutkurve beziehungsweise der Rollenbahn mit den jeweiligen Rollflächen der Nutkurve beziehungsweise der Rollenbahn in Kontakt kommt oder an diesen schleift. Entsprechend überträgt der Schmierstoffträger 4 den Schmierstoff nur auf die Lauffläche 20 des Rollenkörpers 2, nicht jedoch auf andere Anlagenkomponenten. Weiterhin findet auch ein Abrieb beispielsweise über den äußeren Käfig 5 nicht statt, da dieser überhaupt nicht mit anderen Anlagenkomponenten in Kontakt tritt.

Zwischen dem äußeren Käfig 5 und dem Schmierstoffträger 4 ist ein Vorspannmittel 6 in Form eines weichen Elastomers angeordnet, welches den Schmierstoffträger 4 auf die Lauffläche 20 des Rollenkörpers 2 hin vorspannt. Durch die Verwendung des Elastomers 6 kann ein vollflächiges und gleichmäßiges Anliegen des Schmierstoffträgers 4 an der Lauffläche 20 des Rollenkörpers 2 erreicht werden. Auch bei einer Abnutzung des Schmierstoffträgers 4 kann auf diese Weise immer noch eine zufriedenstellende Schmierung der Lauffläche 20 erreicht werden. Anstelle des Elastomers kann beispielsweise auch eine Blattfeder oder ein ähnliches Vorspannmittel verwendet werden.

Aufgrund des Mitführens des Schmierstoffträgers 4 mit dem Rollenkörper 2 kann der Schmierstoffträger 4 weiterhin so eingestellt beziehungsweise ausgebildet werden, dass nur eine sehr geringe Menge an Schmierstoff auf die Lauffläche 20 aufgetragen wird, da bereits nach einer halben Umdrehung wieder Schmierstoff über den gegenüberliegenden Schmierstoffträger 4 aufgetragen wird. Entsprechend kann durch den geringen Auftrag an Schmierstoff eine Verschmutzung der Nutkurve beziehungsweise der Rollenbahn und/oder anderer Anlagenkomponenten zuverlässig reduziert beziehungsweise ganz vermieden werden. Damit mit eignet sich die Kurvenrolle 1 auch besonders gut in Aseptikanlagen, in Vakuumanlagen, sowie in Anlagen, welche besondere Anforderungen an die Anlagenhygiene haben.

Bevorzugt ist der Schmierstoffträger 4 so ausgebildet, dass er auf sämtlichen Außenseiten beziehungsweise den Seiten, welche mit der Umgebung in Kontakt stehen, versiegelt ist, um einen Schmierstoffaustritt zu verhindern. Lediglich die Flächen, welche direkt mit der Lauffläche 20 des Rollenkörpers 2 in Kontakt stehen, sind unversiegelt, so dass der Schmierstoffauftrag auf die Lauffläche 20 des Rollenkörpers 2 stattfinden kann.

Der Schmierstoffträger 4 kann einen Festschmierstoff-Compound umfassen, welcher eine feste, poröse Matrixstruktur ist, in welcher eine größere Schmierstoffmenge gespeichert ist. Beispielsweise kann eine SLC-Schmierung über das Schmierstoff-Compound ermöglicht werden.

Die im Schmierstoffträger 4 gespeicherte Menge an Schmierstoff ist dabei so zu bestimmen, dass sie mit der Lebensdauer eines Wälzlagers zur Lagerung des Rollenkörpers 2 auf dem Rollenbolzen 3 im Wesentlichen übereinstimmt. Entsprechend lässt sich auf diese Weise eine wartungsfreie Kurvenrolle 1 bereitstellen, welche erst zum Ende ihrer Lebensdauer hin vollständig ausgewechselt werden muss.

Der Schmierstoffträger 4 sowie der äußere Käfig 5 und das Elastomer 6 sind bevorzugt auf gegenüberliegenden Seiten der Lauffläche 20 des Rollenkörpers 2 angeordnet, wie in den Figuren gezeigt. Dabei ist der Winkelbereich, welcher jeweils eingeschrieben wird, so bemessen, dass ein Schleifen beziehungsweise Anstoßen in den jeweiligen Nutkurven beziehungsweise Rollenbahnen durch keine der jeweilig genannten Komponenten stattfindet.

Soweit anwendbar können alle einzelnen Merkmale, die in den einzelnen Ausführungsbeispielen dargestellt sind, miteinander kombiniert und/oder ausgetauscht werden, ohne den Bereich der Erfindung zu verlassen.

### Bezugszeichenliste

- 1: Kurvenrolle
- 2: rotierbarer Rollenkörper
- 20: Lauffläche des Rollenkörpers
- 3: Rollenbolzen
- 4: Schmierstoffträger
- 5: äußerer Käfig
- 6: Vorspannmittel

## Patentansprüche

1. Kurvenrolle (1) für ein Kurvengetriebe, eine Kurvensteuerung und/oder eine Rollenbahn, umfassend einen Rollenbolzen (3) und einen um diesen rotierbaren Rollenkörper (2), welcher auf einer Nutkurve des Kurvengetriebes, der Kurvensteuerung und/oder auf einer Rollenbahn führbar ist,
**gekennzeichnet durch**
einen an dem Rollenbolzen (3) gehaltenen Schmierstoffträger (4) zur Abgabe von Schmierstoff auf die Lauffläche (20) des Rollenkörpers (2).

2. Kurvenrolle (1) gemäß Anspruch 1, **dadurch gekennzeichnet, dass** der Schmierstoffträger (4) an dem Rollenbolzen (3) verdrehsicher gehalten ist.

3. Kurvenrolle (1) gemäß Anspruch 1 oder 2, **dadurch gekennzeichnet, dass** der Schmierstoffträger (4) einen Festschmierstoff-Compound umfasst, bevorzugt in Form einer festen, porösen Matrixstruktur, in welcher eine Schmierstoffmenge gespeichert ist.

4. Kurvenrolle (1) gemäß einem der vorstehenden Ansprüche, **dadurch gekennzeichnet, dass** an dem Rollenbolzen (3) ein äußerer Käfig (5) gehalten ist, in welchem der Schmierstoffträger (4) aufgenommen ist.

5. Kurvenrolle (1) gemäß Anspruch 4, **dadurch gekennzeichnet, dass** zwischen dem äußeren Käfig (5) und dem Schmierstoffträger (4) ein Vorspannmittel (6) vorgesehen ist, um den Schmierstoffträger (4) auf die Lauffläche (20) des Rollenkörpers (2) hin vorzuspannen, wobei das Vorspannmittel (6) bevorzugt ein Elastomer oder eine Blattfeder ist.

6. Kurvenrolle (1) gemäß einem der vorstehenden Ansprüche, **dadurch gekennzeichnet, dass** der Schmierstoffträger (4) symmetrisch zum Rollenbolzen (3) angeordnet ist.

7. Kurvenrolle (1) gemäß einem der vorstehenden Ansprüche, **dadurch gekennzeichnet, dass** der Schmierstoffträger (4) konzentrisch zum Rollenbolzen (3) angeordnet ist.

8. Kurvenrolle (1) gemäß einem der vorstehenden Ansprüche, **dadurch gekennzeichnet, dass** der Schmierstoffträger (4) mindestens zwei Teile aufweist, welche an dem Rollenbolzen (3) gehalten sind, bevorzugt mittels zwei äußeren Käfigen.

9. Kurvenrolle (1) gemäß einem der vorstehenden Ansprüche, **dadurch gekennzeichnet, dass** der Schmierstoffträger (4) in einem Winkelbereich des Rollenkörpers (2) vorgesehen ist, welcher einen Kontaktbereich der Lauffläche (20) des Rollenkörpers (2) mit einer Kurvennut eines Kurvengetriebes oder einer Kurvensteuerung und/oder einen Kontaktbereich mit einer Rollenbahn frei lässt.

10. Kurvenrolle (1) gemäß einem der vorstehenden Ansprüche, **dadurch gekennzeichnet, dass** der Schmierstoffträger (4) an allen Seiten, welche Kontakt zur Umgebung haben, versiegelt ist.

## Claims

1. A cam roller (1) for a cam mechanism, a cam control and/or a roller track, comprising a roller bolt (3) and a roller body (2) which is rotatable about the latter and which is guidable on a groove cam of the cam mechanism, the cam control and/or on a roller track,
**characterized by**
a lubricant carrier (4) retained on the roller bolt (3) for the release of lubricant onto the tread (20) of the roller body (2).

2. The cam roller (1) according to claim 1, **characterized in that** the lubricant carrier (4) is retained on the roller bolt (3) in a torsion-proof manner.

3. The cam roller (1) according to claim 1 or 2, **characterized in that** the lubricant carrier (4) comprises a solid lubricant-compound, preferably in the form of a solid, porous matrix structure in which an amount of lubricant is stored.

4. The cam roller (1) according to one of the preceding claims, **characterized in that** an outer cage (5) is retained on the roller bolt (3) in which the lubricant carrier (4) is accommodated.

5. The cam roller (1) according to claim 4, **characterized in that** between the outer cage (5) and the lubricant carrier (4) a biasing device (6) is provided in order to bias the lubricant carrier (4) towards the tread (20) of the roller body (2) wherein the biasing device (6) preferably is an elastomer or a leaf spring.

6. The cam roller (1) according to one of the preceding claims, **characterized in that** the lubricant carrier (4) is arranged symmetrically to the roller bolt (3).

7. The cam roller (1) according to one of the preceding claims, **characterized in that** the lubricant carrier (4) is arranged concentrically to the roller bolt (3).

8. The cam roller (1) according to one of the preceding claims, **characterized in that** the lubricant carrier (4) comprises at least two parts which are retained on the roller bolt (3), preferably by way of two outer cages.

9. The cam roller (1) according to one of the preceding claims, **characterized in that** the lubricant carrier (4) is provided in an angular range of the roller body (2) leaving a contact area of the tread (20) of the roller body (2) with a cam groove of a cam mechanism or a cam control and/or a contact area with a roller track.

10. The cam roller (1) according to one of the preceding claims, **characterized in that** the lubricant carrier (4) is sealed at all sides contacting the surrounding area.

## Revendications

1. Galet à came (1) pour une transmission par came, une commande par came, et/ou une convoyeur à galets, comprenant un goujon de galet (3) et un corps de galet (2) pouvant tourner autour du goujon de galet (3), lequel peut être guidé sur une came à rainure de la transmission par came, de la commande par came et/ou sur une convoyeur à galets,
**caractérisé par**
un support de lubrifiant (4) retenu sur l'goujon de galet (3) pour délivrer du lubrifiant à la surface de roulement (20) du corps de galet (2).

2. Galet à came (1) selon la revendication 1, **caractérisé en ce que** le support de lubrifiant (4) est retenu de manière solidaire en rotation sur l'goujon de galet (3).

3. Galet à came (1) selon la revendication 1 ou 2, **caractérisé en ce que** le support de lubrifiant (4) comprend un composite de lubrifiant solide, de préférence sous la forme d'une structure matricielle solide poreuse dans laquelle est stockée une quantité de lubrifiant.

4. Galet à came (1) selon l'une quelconque des revendications précédentes, **caractérisé en ce qu'**une cage extérieure (5) est retenue sur l'goujon de galet (3), dans laquelle est reçu le support de lubrifiant (4).

5. Galet à came (1) selon la revendication 4, **caractérisé en ce qu'**entre la cage extérieure (5) et le support de lubrifiant (4) est prévu un moyen de précontrainte (6) afin de précontraindre le support de lubrifiant (4) sur la surface de roulement (20) du corps de galet (2), le moyen de précontrainte (6) étant de préférence un élastomère ou un ressort à lame.

6. Galet à came (1) selon l'une quelconque des revendications précédentes, **caractérisé en ce que** le support de lubrifiant (4) est disposé symétriquement par rapport à l'goujon de galet (3).

7. Galet à came (1) selon l'une quelconque des revendications précédentes, **caractérisé en ce que** le support de lubrifiant (4) est disposé concentriquement par rapport à l'goujon de galet (3).

8. Galet à came (1) selon l'une quelconque des revendications précédentes, **caractérisé en ce que** le support de lubrifiant (4) présente au moins deux parties qui sont retenues sur l'goujon de galet (3), de préférence au moyen de deux cages extérieures.

9. Galet à came (1) selon l'une quelconque des revendications précédentes, **caractérisé en ce que** le support de lubrifiant (4) est prévu dans une région angulaire du corps de galet (2) qui expose une région de contact de la surface de roulement (20) du corps de galet (2) avec une rainure de came d'une transmission par came ou d'une commande par came et/ou une région de contact avec une convoyeur à galets.

10. Galet à came (1) selon l'une quelconque des revendications précédentes, **caractérisé en ce que** le support de lubrifiant (4) est scellé sur tous les côtés qui sont en contact avec l'environnement.
